# EUROPÄISCHE PATENTSCHRIFT

(11) **EP 0 602 319 B1**
(45) Veröffentlichungstag und Bekanntmachung des Hinweises auf die Patenterteilung: **17.06.1998**
(21) Anmeldenummer: 93113001.7
(22) Anmeldetag: 13.08.1993
(51) Int. Cl.: H04Q 7/32

(54) **Verfahren zur Sicherung eines Mobilfunkgerätes gegen unerlaubte Benutzung**
Method for securing a mobile wireless apparatus against unauthorized use
Procédé pour assurer un appareil radio-électrique mobile contre l'emploi non-autorisé

(30) Priorität: 14.12.1992 DE 4242151
(43) Veröffentlichungstag der Anmeldung: 22.06.1994
(73) Patentinhaber: DeTeMobil Deutsche Telekom MobilNet GmbH, 53227 Bonn (DE)
(72) Erfinder: Löhmann, Ekkehard, Dipl.-Math., D-53639 Königswinter (DE); Hake, Jens, Dipl.-Ing., D-09429 Hopfgarten (DE); Thelen, Jörg, Dipl.-Ing., D-53225 Bonn (DE)
(74) Vertreter: Riebling, Peter, Dr.-Ing.

(56) Entgegenhaltungen:
- EP-A- 0 336 079
- EP-A- 0 502 446
- WO-A-92/19078

## Beschreibung

Die Erfindung betrifft ein Verfahren zur Sicherung eines Mobilfunkgerätes gegen unerlaubte Benutzung, wobei ein Teilnehmer-Identifikations-Modul mit dem Mobilfunkgerät verbunden wird, so daß ein Datenaustausch stattfinden kann.

Bei derzeit eingeführten Mobilfunknetzen erfolgt über ein Teilnehmer-Identifikations-Modul in Form einer Chip-Karte eine Authentitätsprüfung vor einem Zugang zum Mobilfunknetz. Dazu wird vom Mobilfunknetz eine Zufallszahl über das Mobilfunkgerät zum Teilnehmer-Identifikations-Modul übertragen. Dort wird nach einem vorgegebenen Algorithmus unter Benutzung eines im Teilnehmer-Identifikations-Modul gespeicherten Kartenschlüssels ein Authentifikationsparameter berechnet. Dieser wird über das Mobilfunkgerät zum Mobilfunknetz übertragen und dort geprüft.

Ein derartiges Verfahren ist aus EP-A-502446 bekannt.

Diese Prozedur erfolgt nach dem GSM-Standard, der unter anderem den Algorithmus zur Bildung des Authentifikationsparameters beinhaltet. Das Mobilfunkgerät ist dabei lediglich zur Übertragung der Daten in beiden Richtungen beteiligt, so daß eine Prüfung des Mobilfunkgerätes bezüglich einer erlaubten oder unerlaubten Benutzung nicht stattfindet.

Mit der ständig wachsenden Verbreitung von Mobilfunkgeräten wächst die Gefahr des Diebstahls. Aufgabe der vorliegenden Erfindung ist es, den Diebstahl von Mobilfunkgeräten dadurch zu verhindern, daß das Mobilfunkgerät gegen eine unerlaubte Benutzung gesichert ist.

Das erfindungsgemäße Verfahren ist dadurch gekennzeichnet, daß nach Eingabe eines Geräte-Codes eine Initialisierung dadurch durchgeführt wird, daß
(a) von dem Mobilfunkgerät eine Zahl zum Teilnehmer-Identifikations-Modul übertragen wird,
(b) in dem Teilnehmer-Identifikations-Modul aus der Zahl mit Hilfe eines im Teilnehmer-Identifikations-Modul gespeicherten Codes (Kartenschlüssel) ein Authentifikationsparameter berechnet und an das Mobilfunkgerät übertragen wird und
(c) im Mobilfunkgerät die Zahl und der Authentifikationsparameter als Duplet nichtflüchtig gespeichert werden,
und daß bei einer nachfolgenden Inbetriebnahme und Eingabe einer persönlichen Identifikations-Nummer im Mobilfunkgerät zur Authentitätsprüfung
(d) die in dem Duplet enthaltene Zahl zum Identifikations-Modul übertragen wird,
(e) in dem Teilnehmer-Identifikations-Modul aus der Zahl mit Hilfe des im Teilnehmer-Identifikations-Modul gespeicherten Codes (Kartenschlüssel) ein Authentifikationsparameter berechnet und an das Mobilfunkgerät übertragen wird,
(f) im Mobilfunkgerät der vom Teilnehmer-Identifikations-Modul übertragene Authentifikationsparameter mit dem gespeicherten Authentifikationsparameter verglichen wird, und
(g) bei Ungleichheit eine weitere Inbetriebnahme, insbesondere ein Verbindungsaufbau, gesperrt wird und bei Gleichheit das Mobilfunkgerät zur Benutzung freigegeben wird.

Ein mit dem erfindungsgemäßen Verfahren gesichertes Mobilfunkgerät kann nur mit demjenigen Teilnehmer-Identifikations-Modul betrieben werden, mit welchem die Initialisierung erfolgte. Als weiterer Vorteil ist anzusehen, daß für die Durchführung des erfindungsgemäßen Verfahrens die gleichen Protokolle wie bei dem Authentifikationsprozeß zwischen dem Mobilfunknetz und dem Teilnehmer-Identifikations-Modul verwendet werden können. Dadurch sind weder die Entwicklung noch die Implementierung abweichender Protokolle und Algorithmen erforderlich.

Außerdem bietet das erfindungsgemäße Verfahren den Vorteil, daß ein zur Initialisierung des Mobilfunkgerätes erforderlicher Geräte-Code im wesentlichen nur einmal bei der ersten Inbetriebnahme oder bei einem Wechsel des authorisierten Teilnehmers eingegeben zu werden braucht. Im Gegensatz zu der persönlichen Identifikations-Nummer (PIN), die der Teilnehmer für jeden Verbindungsaufbau benötigt, braucht der Geräte-Code nicht ständig im Gedächtnis behalten bzw. in Form eines Notizzettels mitgeführt zu werden.

Das erfindungsgemäße Verfahren hat ferner den Vorteil, daß eine Speicherung von personenbezogenen Daten im Mobilfunkgerät nicht erforderlich ist - also auch nicht eine Speicherung des Kartenschlüssels.

Selbst wenn der Teilnehmer das Teilnehmer-Identifikations-Modul zusammen mit dem Mobilfunkgerät aufbewahrt und beides gestohlen wird, kann der Dieb das Mobilfunkgerät nicht mehr benutzen, nachdem der Teilnehmer bei dem Netzbetreiber den Kartenschlüssel sperren lassen hat.

Eine Weiterbildung des erfindungsgemäßen Verfahrens besteht darin, daß bei der Initialisierung die Schritte (a) bis (c) mit verschiedenen Zahlen wiederholt werden, bis eine vorgegebene Anzahl von Duplets gespeichert ist, daß bei einer nachfolgenden Inbetriebnahme und Eingabe einer persönlichen Identifikations-Nummer zur Authentitätsprüfung im Mobilfunkgerät eines der gespeicherten Duplets zufällig ausgewählt wird und daß nach jedem Vergleich zwischen dem gespeicherten und dem jeweils vom Teilnehmer-Identifikations-Modul übertragenen Authentifikationsparameter das zuvor ausgewählte Duplet gelöscht wird.

Demgegenüber, daß das erfindungsgemäße Verfahren an sich mit einer vorgegebenen Zahl durchgeführt werden kann, wird mit dieser Weiterbildung verhindert, daß bei einem gestohlenen Mobilfunkgerät oder bei einem Mobilfunkgerät, das einem Dieb zunächst nur vorübergehend zur Verfügung steht, durch eine geeignete Manipulation an der Schnittstelle zwischen Mobilfunkgerät und Teilnehmer-Identifikations-Modul ein Duplet ausgelesen und später zur Inbetriebnahme des Mobilfunkgerätes benutzt werden kann. Vorzugsweise ist bei dieser Weiterbildung vorgesehen, daß die Zahlen Zufallszahlen sind. Die vorgegebene Anzahl kann beispielsweise fünf sein.

Zur Erzeugung neuer Duplets ist bei einer vorteilhaften Ausführungsform der Erfindung vorgesehen, daß während eines durch den Vergleich freigegebenen Betriebs geprüft wird, ob eine Mindestzahl von Duplets gespeichert sind, und daß bei weniger gespeicherten Duplets als der Mindestzahl neue Duplets gemäß den Schritten (a) bis (c) erzeugt und gespeichert werden.

Diese Ausführungsform kann dadurch weitergebildet werden, daß durch eine Trennung der Verbindung zwischen dem Mobilfunkgerät und dem Teilnehmer-Identifikations-Modul während des durch den Vergleich freigegebenen Betriebes die Erzeugung der weiteren Duplets gesperrt wird. Dadurch wird ein Wechsel des Teilnehmer-Identifikations-Moduls nach einer erfolgreichen Authentitätsprüfung und eine anschließende Erzeugung neuer Duplets mit einem anderen Teilnehmer-Identifikations-Modul verhindert. Dadurch würde ein Betrieb eines zusammen mit dem Teilnehmer-Identifikations-Modul gestohlenen Mobilfunkgerätes mit einem anderen Teilnehmer-Identifikations-Modul trotz Sperrung des Kartenschlüssels des gestohlenen Teilnehmer-Identifikations-Modul beim Netzbetreiber ermöglichen.

Eine erfolglose Authentitätsprüfung führt an sich dazu, daß das Mobilfunkgerät nicht freigegeben wird, jedoch durch eine folgende erfolgreiche Authentitätsprüfung in Betrieb genommen werden kann. Dieses kann sich als vorteilhaft erweisen, wenn beispielsweise ein Teilnehmer mit mehreren Teilnehmer-Identifikations-Modulen versehentlich nicht das zusammen mit dem Mobilfunkgerät initialisierte Teilnehmer-Identifikations-Modul verwendet.

Um jedoch im Falle einer mißbräuchlichen Benutzung ein Ausprobieren zu verhindern, kann vorgesehen sein, daß nach mehreren erfolglosen Authentitätsprüfungen das Mobilfunkgerät gesperrt wird und nur durch Eingabe eines weiteren Codes, vorzugsweise des Geräte-Codes, in Betrieb genommen werden kann.

Zur weiteren Erhöhung der Sicherheit dient eine andere Weiterbildung dadurch, daß die Übertragung von Daten zwischen dem Mobilfunkgerät und dem Teilnehmer-Identifikations-Modul verschlüsselt erfolgt.

Eine vorteilhafte Ausführungsform dieser Weiterbildung besteht darin, daß bei der Initialisierung ein zu einer verschlüsselten Übertragung des Authentifikationsparameters dienendes weiteres Duplet erzeugt wird und daß zur Erzeugung neuer Duplets außer jeweils einer neuen Zufallszahl die Zufallszahl des weiteren Duplets zum Teilnehmer-Identifikations-Modul übertragen wird, daß der aus der neuen Zufallszahl berechnete Authentifikationsparameter und der aus der Zufallszahl des weiteren Duplets berechnete Authentifikationsparameter symmetrisch verschlüsselt zum Mobilfunkgerät übertragen werden und daß nach einer Entschlüsselung der Authentifikationsparameter aus der neuen Zufallszahl zusammen mit der neuen Zufallszahl als neues Duplet gespeichert wird.

Dadurch wird eine mißbräuchliche Benutzung auch dann verhindert, wenn der Dieb sich mit einem gestohlenen Teilnehmer-Identifikations-Modul bei einem gestohlenen Mobilfunkgerät wiederholt an- und abmeldet und dabei über längere Zeit die Erzeugung neuerer Duplets beobachtet. Durch die Verschlüsselung gemäß dieser Weiterbildung wird dieses Vorgehen unmöglich gemacht.

Um eine Benutzung eines nach dem erfindungsgemäßen Verfahren gesicherten Mobilfunkgerätes auch für mehrere berechtigte Teilnehmer zu ermöglichen, ist bei einer Weiterbildung vorgesehen, daß bei einer Initialisierung eines Mobilfunkgerätes für mehrere Teilnehmer mit verschiedenen Teilnehmer-Identifikations-Modulen erzeugte Duplets gespeichert werden.

Bei dem derart für mehrere Teilnehmer initialisierten Mobilfunkgerät werden zur Authentitätsprüfung nacheinander Zufallszahlen mehrerer Duplets in das Teilnehmer-Identifikations-Modul übertragen, wonach der weitere Betrieb des Mobilfunkgerätes gesperrt wird, wenn keiner der dabei erzeugten Authentifikationsparameter dem entsprechenden gespeicherten Authentifikationsparameter gleicht.

Das erfindungsgemäße Verfahren setzt allerdings voraus, daß die Duplets bzw. das weitere Duplet aus dem Mobilfunkgerät nicht auslesbar ist. Um dieses zu verhindern, sind an sich bekannte Verfahren anwendbar.

Ein Ausführungsbeispiel der Erfindung ist in der Zeichnung anhand mehrerer Figuren dargestellt und in der nachfolgenden Beschreibung näher erläutert. Es zeigt:
- Fig. 1: ein Ablaufdiagramm, das erfindungsgemäße Verfahrensschritte bei der Initialisierung eines Mobilfunkgerätes darstellt,
- Fig. 2: ein Ablaufdiagramm, das Verfahrensschritte zur Überprüfung der rechtmäßigen Benutzung eines nach Fig. 1 gesicherten Mobilfunkgerätes darstellt, und
- Fig. 3: ein Ablaufdiagramm eines Programms zur Erzeugung und Speicherung weiterer Duplets im Mobilfunkgerät.

Die in den Ablaufdiagrammen dargestellten Verfahrensschritte sind als Programme neben anderen zum Betrieb des Mobilfunkgerätes erforderlichen Programmen im Mobilfunkgerät implementiert und werden in einem Mikroprozessor des Gerätes bei Bedarf abgearbeitet. Eingaben des Teilnehmers und Ausgaben (Anzeigen für den Teilnehmer) erfolgen in an sich bekannter Weise, beispielsweise durch Drucktasten und LCD-Displays.

Die einzelnen Teile der Ablaufdiagramme sind spaltenweise danach geordnet, ob sie beim Teilnehmer S, im Mobilfunkgerät ME oder im Teilnehmer-Identifikations-Modul SIM ablaufen. Dabei sind die Abkürzungen in Anlehnung an die englischen Bezeichnungen Subscriber, Mobile Equipment und Subscriber Identity Module gewählt. Der Informationsfluß zwischen diesen drei Stellen ist durch pfeilförmige Ausbildung der jeweiligen Blöcke gekennzeichnet.

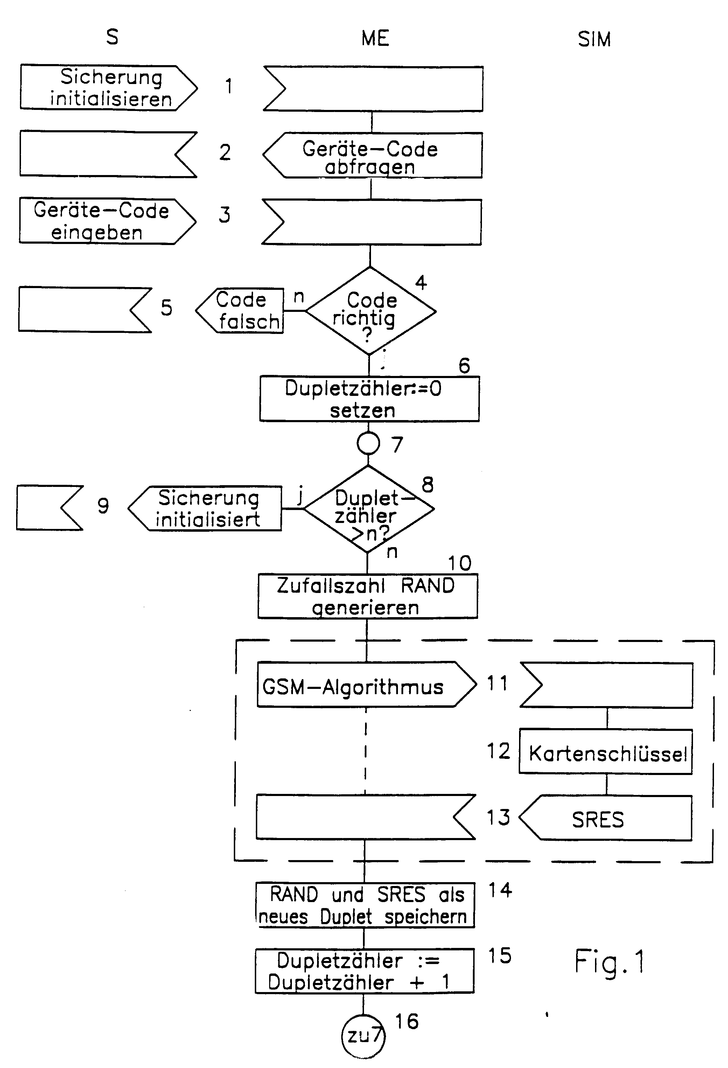

Der in Fig. 1 dargestellte Initialisierungsprozeß wird mit der Eingabe 1 eines geeigneten Befehls gestartet. Daraufhin fordert das Mobilfunkgerät bei 2 den Teilnehmer zur Eingabe eines Geräte-Codes auf. Im Mobilfunkgerät wird bei 4 geprüft, ob der bei 3 eingegebene Code mit einem gespeicherten Code übereinstimmt. Bei einem falschen Code erfolgt eine entsprechende Ausgabe 5 und ein Abbruch des Programms. Ist ein richtiger Geräte-Code eingegeben, wird bei 6 ein Dupletzähler auf 0 gesetzt. Nach Eingabe des richtigen Geräte-Codes können übrigens weitere Funktionen vorgenommen werden, wie beispielsweise eine Aufhebung der mit dem erfindungsgemäßen Verfahren erfolgten Sicherung, was in den Figuren nicht dargestellt ist.

Die Kommunikation mit dem Teilnehmer-Identifikations-Modul und die Berechnung des Authentifikationsparameters SRES (in den Figuren gestrichelt umrahmt) erfolgt nach dem GSM-Standard, so daß das für die Authentifikation gegenüber dem Mobilfunknetz eingerichtete Teilnehmer-Identifikations-Modul unverändert für das erfindungsgemäße Verfahren verwendet werden kann.

Eine Verzweigung 8 erfolgt in Abhängigkeit davon, ob der Dupletzähler > n ist. Ist dieses der Fall, ist die Diebstahlsicherung initialisiert, was bei 9 dem Teilnehmer angezeigt wird. Ist jedoch der Dupletzähler noch nicht > n, wird bei 10 eine Zufallszahl RAND generiert. Diese Zufallszahl wird bei 11 unter Verwendung des GSM-Algorithmus zum Teilnehmer-Identifikations-Modul SIM übertragen. Dort wird mit dem dort gespeicherten Kartenschlüssel KI und einem dort bereits implementierten Algorithmus zur Authentifikation des Teilnehmers gegenüber dem GSM-Netz ein Authentifikationsparameter SRES berechnet (Programmteil 12). Bei 13 wird SRES zu dem Mobilfunkgerät ME übertragen.

Der empfangene Authentifikationsparameter SRES wird zusammen mit der Zufallszahl RAND als Duplet bei 14 in einem nichtflüchtigen Speicher des Mobilfunkgerätes ME abgelegt. Danach wird bei 15 der Dupletzähler inkrementiert, worauf bei 16 ein Sprung nach 7 erfolgt. Ist der Dupletzähler noch nicht > n, wird anhand der Programmschritte 10 bis 14 ein neues Duplet erzeugt und gespeichert. Ist jedoch der Dupletzähler > n, wird die Initialisierung beendet, was bei 9 dem Teilnehmer angezeigt wird.

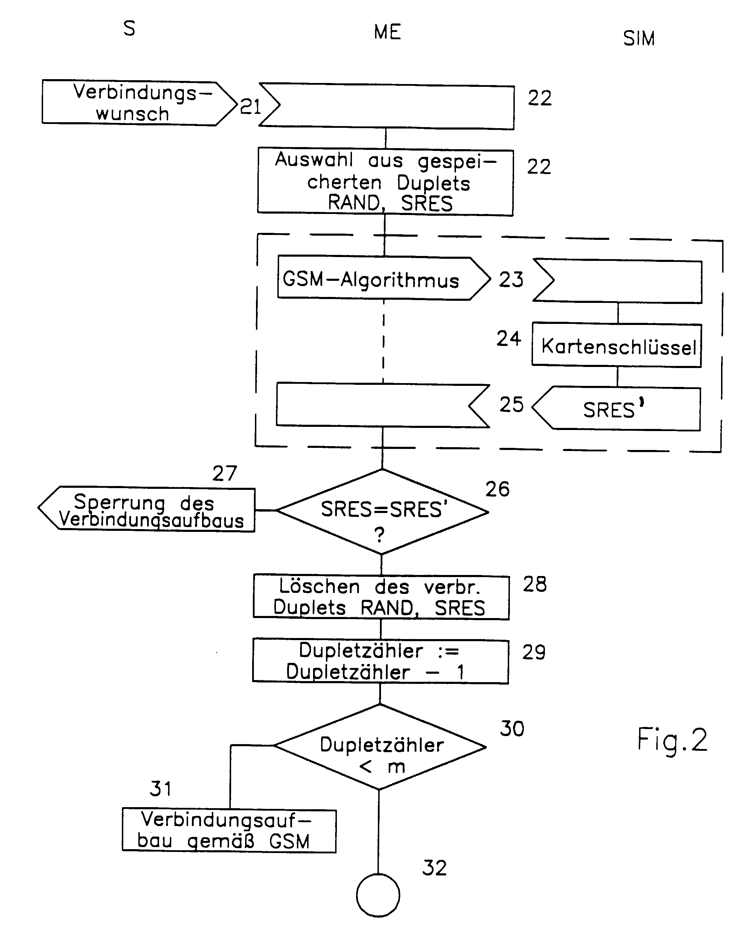

Der Authentifikationsprozeß bei der Benutzung des Mobilfunkgerätes ist in Fig. 2 veranschaulicht. Nach einer Eingabe 21, die den Wunsch des Teilnehmers nach einem GSM-Netzverbindungsaufbau bedeutet, wird bei 22 nach einem Zufalls-Algorithmus eines der gespeicherten Duplets ausgewählt und bei 23 dessen Zufallszahl an das Teilnehmer-Identifikations-Modul übertragen. Bei 24 wird - wie bereits im Zusammenhang mit Fig. 1 erläutert - ein Authentifikationsparameter SRES' mit Hilfe des Algorithmus zur Authentifikation des Teilnehmers unter Verwendung des Kartenschlüssels KI erzeugt. Bei 25 wird SRES' an das Mobilfunkgerät ME übertragen. Danach wird das Programm bei 26 in Abhängigkeit davon verzweigt, ob SRES' gleich SRES ist.

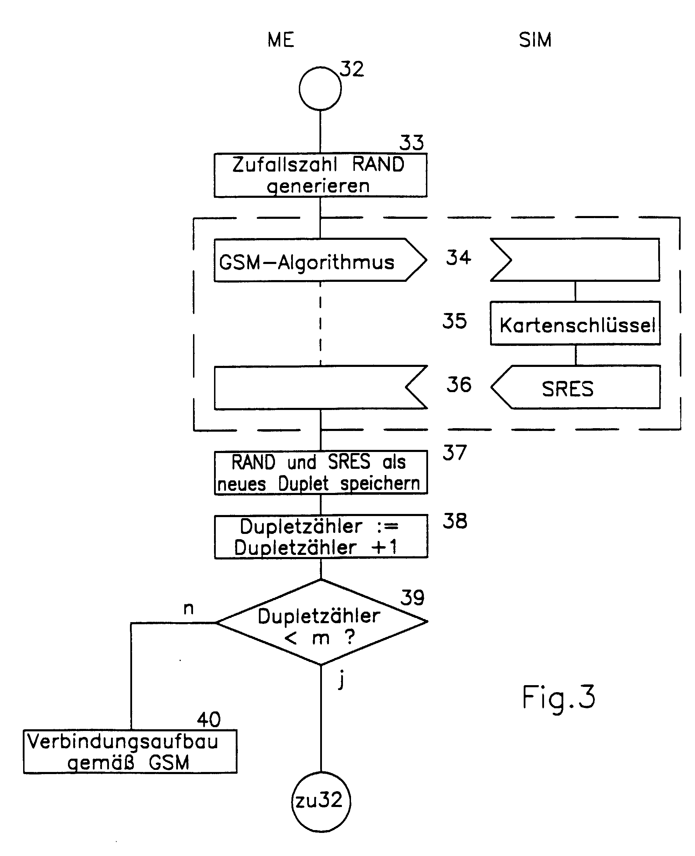

Bei Ungleichheit wird der weitere Betrieb, insbesondere ein Verbindungsaufbau mit Hilfe des Programmteils 27 gesperrt. Sind die Authentifikationsparameter jedoch gleich, wird das in den Programmteilen 23 bis 26 benutzte und damit verbrauchte Duplet bei 28 gelöscht. Der Dupletzähler wird dann bei 29 dekrementiert, worauf bei 30 eine Verzweigung des Programms in Abhängigkeit davon erfolgt, ob der Dupletzähler < m ist. Ist dieses noch nicht der Fall, wird bei 31 der Verbindungsaufbau vorgenommen. Wenn der Dupletzähler < m ist, erfolgt bei 32 eine Übergabe an das in Fig. 3 dargestellte Programm zur Erzeugung und Speicherung von weiteren Duplets.

Nach dem Start bei 32 wird bei dem in Fig. 3 dargestellten Programm bei 33 eine Zufallszahl generiert, die bei 34 dem Teilnehmer-Identifikations-Modul SIM zugeführt wird. Dort wird wiederum unter Zuhilfenahme des Kartenschlüssels KI im Programmteil 35 ein Authentifikationsparameter SRES erzeugt und bei 36 an das Mobilfunkgerät ME übertragen. Der übertragene Authentifikationsparameter SRES wird zusammen mit der Zufallszahl RAND als neues Duplet bei 37 gespeichert, worauf bei 38 der Dupletzähler inkrementiert wird.

Nach einer Verzweigung 39 wird das Programm in Abhängigkeit davon wiederholt, ob der Dupletzähler < m ist. Ist der Dupletzähler nicht mehr < m, sind also genug Duplets vorhanden, wird bei 40 der gewünschte Verbindungsaufbau gestartet.

## Patentansprüche

1. Verfahren zur Sicherung eines Mobilfunkgerätes gegen unerlaubte Benutzung, wobei ein Teilnehmer-Identifikations-Modul mit dem Mobilfunkgerät verbunden wird, so daß ein Datenaustausch stattfinden kann, dadurch gekennzeichnet, daß nach Eingabe eines Geräte-Codes eine Initialisierung dadurch durchgeführt wird, daß
(a) von dem Mobilfunkgerät eine Zahl zum Teilnehmer-Identifikations-Modul übertragen wird (10,11),
(b) in dem Teilnehmer-Identifikations-Modul aus der Zahl mit Hilfe eines im Teilnehmer-Identifikations-Modul gespeicherten Codes ein Authentifikationsparameter berechnet (12) und an das Mobilfunkgerät übertragen wird (13) und
(c) im Mobilfunkgerät die Zahl und der Authentifikationsparameter als Duplet nicht-flüchtig gespeichert (14) werden,
und daß bei einer nachfolgenden Inbetriebnahme und Eingabe einer persönlichen Identifikations-Nummer im Mobilfunkgerät zur Authentitätsprüfung
(d) die in dem Duplet enthaltene Zahl zum Identifikations-Modul übertragen wird (22,23),
(e) in dem Teilnehmer-Identifikations-Modul aus der Zahl mit Hilfe des im Teilnehmer-Identifikations-Modul gespeicherten Codes ein Authentifikationsparameter berechnet (24) und an das Mobilfunkgerät übertragen wird (25),
(f) im Mobilfunkgerät der vom Teilnehmer-Identifikations-Modul übertragene Authentifikationsparameter mit dem gespeicherten Authentifikationsparameter verglichen wird (26), und
(g) bei Ungleichheit eine weitere Inbetriebnahme gesperrt wird (27) und bei Gleichheit das Mobilfunkgerät zur Benutzung freigegeben wird.

2. Verfahren nach Anspruch 1, dadurch gekennzeichnet, daß bei der Initialisierung die Schritte (a) bis (c) mit verschiedenen Zahlen wiederholt werden, bis eine vorgegebene Anzahl von Duplets gespeichert ist, daß bei einer nachfolgenden Inbetriebnahme und Eingabe einer persönlichen Identifikations-Nummer zur Authentitätsprüfung im Mobilfunkgerät eines der gespeicherten Duplets zufällig ausgewählt wird und daß nach jedem Vergleich zwischen dem gespeicherten und dem jeweils vom Teilnehmer-Identifikations-Modul übertragenen Authentifikationsparameter das zuvor ausgewählte Duplet gelöscht wird.

3. Verfahren nach Anspruch 2, dadurch gekennzeichnet, daß die Zahlen Zufallszahlen sind.

4. Verfahren nach einem der Ansprüche 2 oder 3, dadurch gekennzeichnet, daß während eines durch den Vergleich freigegebenen Betriebs geprüft wird, ob eine Mindestzahl von Duplets gespeichert sind, und daß bei weniger gespeicherten Duplets als der Mindestzahl neue Duplets gemäß den Schritten (a) bis (c) erzeugt und gespeichert werden.

5. Verfahren nach Anspruch 4, dadurch gekennzeichnet, daß durch eine Trennung der Verbindung zwischen dem Mobilfunkgerät und dem Teilnehmer-Identifikations-Modul während des durch den Vergleich freigegebenen Betriebs die Erzeugung der weiteren Duplets gesperrt wird.

6. Verfahren nach einem der vorhergehenden Ansprüche, dadurch gekennzeichnet, daß nach mehreren erfolglosen Authentitätsprüfungen das Mobilfunkgerät gesperrt wird und nur durch Eingabe eines weiteren Codes, vorzugsweise des Geräte-Codes in Betrieb genommen werden kann.

7. Verfahren nach einem der vorhergehenden Ansprüche, dadurch gekennzeichnet, daß die Übertragung von Daten zwischen dem Mobilfunkgerät und dem Teilnehmer-Identifikations-Modul verschlüsselt erfolgt.

8. Verfahren nach Anspruch 7, dadurch gekennzeichnet, daß bei der Initialisierung ein zu einer verschlüsselten Übertragung des Authentifikationsparameters dienendes weiteres Duplet erzeugt wird und daß zur Erzeugung neuer Duplets außer jeweils einer neuen Zufallszahl die Zufallszahl des weiteren Duplets zum Teilnehmer-Identifikations-Modul übertragen wird, daß der aus der neuen Zufallszahl berechnete Authentifikationsparameter und der aus der Zufallszahl des weiteren Duplets berechnete Authentifikationsparameter symmetrisch verschlüsselt zum Mobilfunkgerät übertragen werden und daß nach einer Entschlüsselung der Authentifikationsparameter aus der neuen Zufallszahl zusammen mit der neuen Zufallszahl als neues Duplet gespeichert wird.

9. Verfahren nach einem der vorhergehenden Ansprüche, dadurch gekennzeichnet, daß bei einer Initialisierung eines Mobilfunkgerätes für mehrere Teilnehmer mit verschiedenen Teilnehmer-Identifikations-Modulen erzeugte Duplets gespeichert werden.

10. Verfahren nach Anspruch 9, dadurch gekennzeichnet, daß bei dem für mehrere Teilnehmer initialisierten Mobilfunkgerät zur Authentitätsprüfung nacheinander Zufallszahlen mehrerer Duplets in das Teilnehmer-Identifikations-Modul übertragen werden und daß der weitere Betrieb des Mobilfunkgerätes gesperrt wird, wenn keiner der dabei erzeugten Authentifikationsparameter dem entsprechenden gespeicherten Authentifikationsparameter gleicht.

## Claims

1. Method for protecting a mobile radio against unauthorized use, a subscriber identification module being connected to the mobile radio, such that data interchange can take place, characterized in that, once a unit code has been entered, initialization is carried out in that
(a) a number is transmitted (10, 11) from the mobile radio to the subscriber identification module,
(b) a code which is stored in the subscriber identification module is used in the subscriber identification module to calculate (12) an authentication parameter from the number and this authentication parameter is transmitted (13) to the mobile radio, and
(c) in the mobile radio, the number and the authentication parameter are stored (14) in a non-volatile manner as a duplet,
and in that, when the mobile radio is next used and the personal identification number is entered into it for authentity checking,
(d) the number contained in the duplet is transmitted (22, 23) to the identification module,
(e) the code which is stored in the subscriber identification module is used in the subscriber identification module to calculate (24) an authentication parameter from the number and this authentication parameter is transmitted (25) to the mobile radio,
(f) in the mobile radio, the authentication parameter transmitted from the subscriber identification module is compared (26) with the stored authentication parameter, and
(g) if they are not the same, further use is inhibited (27) and, if they are the same, the mobile radio is cleared for use.

2. Method according to Claim 1, characterized in that, during initialization, steps (a) to (c) are repeated with different numbers until a predetermined number of duplets is stored, in that, when the mobile radio is next used and the personal identification number is entered into it, for authentity checking in the mobile radio one of the stored duplets is selected at random, and in that, after each comparison between the stored authentication parameter and the authentication parameter transmitted by the subscriber identification module in each case, the previously selected duplet is deleted.

3. Method according to Claim 2, characterized in that the numbers are random numbers.

4. Method according to one of Claims 2 or 3, characterized in that, during operation which has been cleared by the comparison, a check is carried out to determine whether a minimum number of duplets are stored, and in that, if the number of stored duplets is less than the minimum number, new duplets are produced and stored in accordance with steps (a) to (c).

5. Method according to Claim 4, characterized in that the production of further duplets is inhibited by breaking the link between the mobile radio and the subscriber identification module during operation which has been cleared by the comparison.

6. Method according to one of the preceding claims, characterized in that the mobile radio is inhibited after a number of unsuccessful authentity checks and can be brought into use only by entering a further code, preferably the unit code.

7. Method according to one of the preceding claims, characterized in that the data are transmitted between the mobile radio and the subscriber identification module in encrypted form.

8. Method according to Claim 7, characterized in that a further duplet is produced during initialization and is used for encrypted transmission of the authentication parameter, and in that, in order to produce new duplets, apart from in each case one new random number, the random number of the further duplet is transmitted to the subscriber identification module, in that the authentication parameter calculated from the new random number and the authentication parameter calculated from the random number of the further duplet are transmitted symmetrically in encrypted form to the mobile radio, and in that, after decryption, the authentication parameter from the new random number is stored together with the new random number as a new duplet.

9. Method according to one of the preceding claims, characterized in that, during initialization of a mobile radio, duplets which are produced with different subscriber identification modules are stored for a plurality of subscribers.

10. Method according to Claim 9, characterized in that, in the case of the mobile radio which is initialized for a plurality of subscribers, random numbers of a plurality of duplets are transmitted successively to the subscriber identification module for the authentity check, and in that the further operation of the mobile radio is inhibited if none of the authentication parameters produced in this case matches the corresponding, stored authentication parameter.

## Revendications

1. Procédé pour protéger un appareil radiotéléphonique mobile contre une utilisation non autorisée, selon lequel un module d'identification d'abonnés est relié à l'appareil radiotéléphonique mobile, de sorte qu'un échange de données peut avoir lieu, caractérisé en ce que, après l'entrée d'un code d'appareil, une initialisation est effectuée grâce au fait que :
(a) un nombre est transmis (10, 11) par l'appareil au module d'identification d'abonnés,
(b) dans le module d'identification d'abonnés, un paramètre d'authentification est calculé (12) à partir de ce nombre à l'aide d'un code mis en mémoire dans ledit module, et est transmis (13) à l'appareil radiotéléphonique mobile, et
(c) dans l'appareil radiotéléphonique mobile, le nombre et le paramètre d'authentification sont mis en mémoire (14) de manière non volatile sous la forme d'un doublet,
et en ce que lors d'une mise en marche consécutive et de l'entrée d'un numéro d'identification personnel, dans l'appareil radiotéléphonique mobile, pour le contrôle d'authenticité,
(d) le nombre contenu dans le doublet est transmis (22, 23) au module d'identification,
(e) un paramètre d'authentification est calculé (24) dans le module d'identification d'abonnés à partir du nombre, à l'aide du code mis en mémoire dans ledit module, et est transmis (25) à l'appareil,
(f) dans l'appareil, le paramètre d'authentification transmis par le module d'identification d'abonnés est comparé (26) au paramètre d'authentification mis en mémoire, et
(g) en cas d'inégalité, une mise en marche ultérieure est bloquée (27) et en cas d'égalité, l'utilisation de l'appareil radiotéléphonique mobile est autorisée.

2. Procédé selon la revendication 1, caractérisé en ce que lors de l'initialisation, les étapes (a) à (c) sont répétées avec des nombres différents jusqu'à ce qu'un nombre prédéfini de doublets soit mis en mémoire, en ce que lors d'une mise en marche consécutive et de l'entrée d'un numéro d'identification personnel pour le contrôle d'authenticité dans l'appareil radiotéléphonique mobile, l'un des doublets mis en mémoire est choisi au hasard, et en ce que, après chaque comparaison entre le paramètre d'authentification mis en mémoire et le paramètre d'authentification transmis à chaque fois par le module d'identification d'abonnés, le doublet choisi auparavant est effacé.

3. Procédé selon la revendication 2, caractérisé en ce que les nombres sont des nombres aléatoires.

4. Procédé selon la revendication 2 ou 3, caractérisé en ce que pendant un fonctionnement autorisé par la comparaison, on vérifie si un nombre minimal de doublets est mis en mémoire, et en ce que si le nombre de doublets mis en mémoire est inférieur au nombre minimal, de nouveaux doublets sont générés et mis en mémoire selon les étapes (a) à (c).

5. Procédé selon la revendication 4, caractérisé en ce que grâce à une séparation de la liaison entre l'appareil radiotéléphonique mobile et le module d'identification d'abonnés pendant le fonctionnement autorisé par la comparaison, la production des autres doublets est bloquée.

6. Procédé selon l'une des revendications précédentes, caractérisé en ce que, après plusieurs contrôles d'authenticité sans succès, l'appareil radiotéléphonique est bloqué et ne peut être mis en marche que grâce à l'entrée d'un autre code, de préférence le code d'appareil.

7. Procédé selon l'une des revendications précédentes, caractérisé en ce que la transmission de données entre l'appareil radiotéléphonique mobile et le module d'identification d'abonnés se fait de manière chiffrée.

8. Procédé selon la revendication 7, caractérisé en ce que lors de l'initialisation est généré un autre doublet qui sert à une transmission chiffrée du paramètre d'authentification, en ce que pour la production de nouveaux doublets, en dehors d'un nouveau nombre aléatoire, le nombre aléatoire de l'autre doublet est transmis au module d'identification d'abonnés, en ce que le paramètre d'authentification calculé à partir du nouveau nombre aléatoire et le paramètre d'authentification calculé à partir du nombre aléatoire de l'autre doublet sont transmis de manière chiffrée symétriquement à l'appareil radiotéléphonique mobile, et en ce que, après un déchiffrement, le paramètre d'authentification est mis en mémoire comme nouveau doublet à partir du nouveau nombre aléatoire, avec celui-ci.

9. Procédé selon l'une des revendications précédentes, caractérisé en ce que lors d'une initialisation d'un appareil radiotéléphonique mobile pour plusieurs abonnés, des doublets générés avec des modules d'identification d'abonnés différents sont mis en mémoire.

10. Procédé selon la revendication 9, caractérisé en ce que dans le cas de l'appareil radiotéléphonique mobile initialisé pour plusieurs abonnés, les nombres aléatoires de plusieurs doublets sont transmis successivement pour le contrôle d'authenticité au module d'identification d'abonnés, et en ce que la poursuite du fonctionnement de l'appareil est bloquée si aucun des paramètres d'authentification générés n'est égal au paramètre d'authentification mis en mémoire correspondant.
